# EUROPEAN PATENT SPECIFICATION

(11) **EP 0 710 435 B1**
(45) Date of publication and mention of the grant of the patent: **27.03.2002**
(21) Application number: 95202973.4
(22) Date of filing: 02.11.1995
(51) Int. Cl.: A01B 73/00

(54) **A machine combination**
Maschinenzusammensetzung
Combinaison de machines

(30) Priority: 02.11.1994 NL 9401816
(43) Date of publication of application: 08.05.1996
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- GB-A- 339 342
- GB-A- 504 496
- US-A- 3 893 283
- US-A- 4 213 628
- US-A- 5 024 456

## Description

The present invention relates to a machine combination for treating farmland as well as for treating the crop growing thereon according to the preamble of claim 1.

Such a machine combination is known from US-A-4,213,628. This machine combination comprises a first horizontal rigid frame having a longitudinal member with spaced front and rear ends. A transverse member extends to one side of the longitudinal member. The outer end of the transverse member is provided with a first hitch for selective attachment to a pulling tongue of the first machine. The first machine is further connected to the first frame by means of an attachment bracket at the rear of the longitudinal member. The first hitch and the attachment bracket each accommodate relative elevational movement between the first machine and the first frame, but restrict any lateral or transverse movement. The front end of the longitudinal member has a pivotal connection to a forwardly extending tongue. A hydraulic cylinder assembly is pivotally connected between the intermediate portion of the forwardly extending tongue and the intermediate portion of the transverse member. The known machine combination further comprises a second rigid frame having a first and a second member joined at right angles to one another. The outer end of the second member has a second hitch mounted to it for attachment to a pulling tongue of the second machine. A hydraulic cylinder assembly is provided between the first and the second rigid frame for alternately locating the second rigid frame with respect to the first rigid frame, for example in a transport position and a working position.

The present invention aims to provide an alternative machine combination. According to the invention, this is achieved in that the coupling beam includes a hinge near its end that is coupled with the first machine and at some distance from the hinge a pivot, in that between the pivot and a more rearwardly located part of the first machine there is situated a first operating element which is pivotable.

From US-A-3,893,283 a machine combination is known in which the coupling beam includes a hinge near its end that is coupled with the second machine and at some distance from the hinge a pivot, in that between the pivot and a forwardly located part of the second machine there is situated an operating element which is pivotable. There is no indication of an operating element acting between the first machine and the coupling beam.

Further embodiments of the invention are disclosed in the subclaims, more specifically, the machines of the machine combination are formed by bale compressors comprises at least two bale compressors, which are preferably constructed as round-balers.

For a better understanding of the invention and to show how the same may be carried into effect, reference will now be made, by way of example, to the accompanying drawings, in which:
Figure 1 is a plan view of an operating position of a machine combination according to the invention;
Figure 2 is a view according to Figure 1 of the transport position of the machine combination, and
Figure 3 is a view according to the arrow III in Figure 2.

Corresponding elements in the drawings are indicated by the same reference numerals. Besides, the invention is by no means restricted to the embodiment shown and described; it only serves to illustrate the inventive idea.

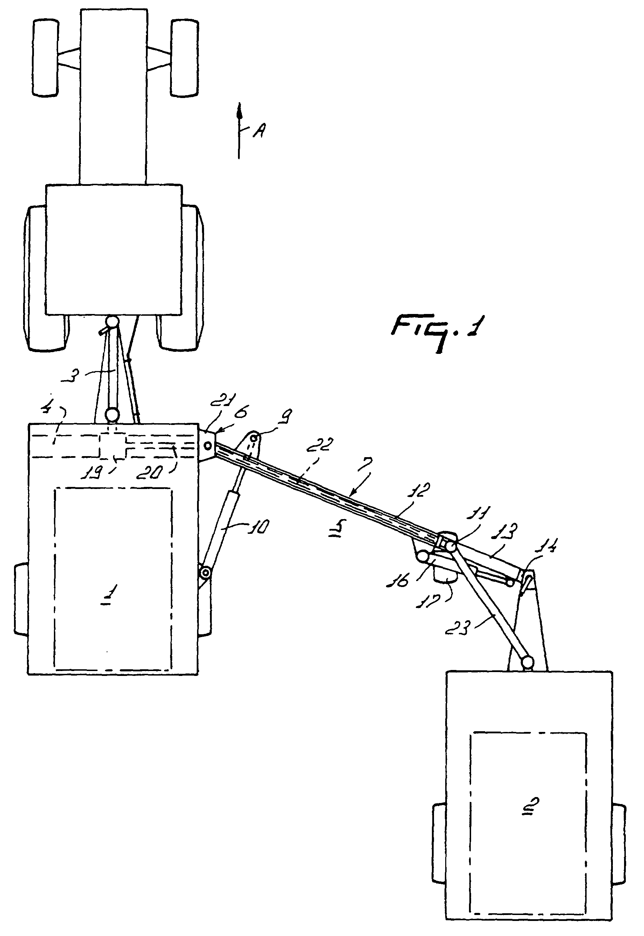

Figures 1, 2 and 3 show the embodiment of the machine combination according to the invention, in which the separate machines are constituted by a baler. The embodiment shown comprises a first baler 1 which is coupled with the draw-hook of a tractor and is connected, for its drive, via a telescopic universal joint 3 with the power take-off shaft of the tractor. The baler 1 is provided with a frame element 4 which, in the present embodiment, is constituted by a frame beam extending transverse to the direction of travel. Both balers 1 and 2 have a working width of approximately 1.5 m. Near an end of the machine, there is connected with the frame element 4 a coupling device 5, to which, at a distance from the baler 1, a commercially available second baler 2 is coupled. The coupling device 5 comprises a square-profile coupling beam 7 which includes, near its end that is coupled with the first baler 1, a hinge 6. At some distance from this hinge 6, there is situated a pivot 9 which is connected with the coupling beam 7 and extends to a point beyond the bottom thereof. Between this pivot 9 and a more rearwardly located part of the baler 1 there is situated a first operating element 10 which is pivotable and is in the form of a hydraulic adjusting cylinder. At some distance from its other end, the coupling beam 7 is provided with a second hinge 11 which divides it into a primary pivoting part 12 and a secondary pivoting part 13. At the end of the secondary pivoting part 13 there is disposed a draw-hook 14, in the present embodiment constituted by a lug, for a hole/pin coupling with the second baler 2. Between a point of the primary pivoting part 12 situated near the second hinge 11 and the secondary pivoting part 13 of the coupling beam 7, there is disposed, also through frame elements including a pivot, a second operating element 16 in the form of a hydraulic adjusting cylinder. The operating element 16 is situated, as seen in plan view, at some distance from and at the side of the second hinge 11 which faces the baler 2. In the vicinity of the second hinge 11, the coupling device 5 is provided with a freely pivotable supporting wheel or castor wheel 17.

In the drive of the first baler 1 there is included a gear box 19 which comprises, besides a transmission for the drive of the first baler 1, also a transmission that is disposed square in relation to the coupling shaft 3 with the tractor. To the gear box 19 there is connected a drive shaft 20 which extends, parallel to the frame beam 4, to the connection point of the coupling device 5 with the first baler 1. The coupling device 5 is provided, at the point where the first hinge 6 is located, with a pivotable transmission box 21. Hereto is connected on one side the aforementioned drive shaft 20 of the first baler 1, and on the other side the further drive shaft 22, which is guided above and along the coupling beam 7 and bearing-supported thereagainst. Near the second hinge 11 of the coupling device 5, the further drive shaft 22 is connected via a universal joint with a telescopic coupling shaft 23, which is connected near its other end, also via a universal joint, to the drive of the second baler 2. Both machines are provided, in their compressing chambers, with pressure sensors, which are in connection with a control panel 24 to be placed in the tractor. The panel 24 comprises indicators showing the pressure in each of the pressure chambers separately, and adjusting means for adjusting the maximum pressure attainable in each of the pressure chambers separately.

The operation of the machine combination will be explained in what follows.

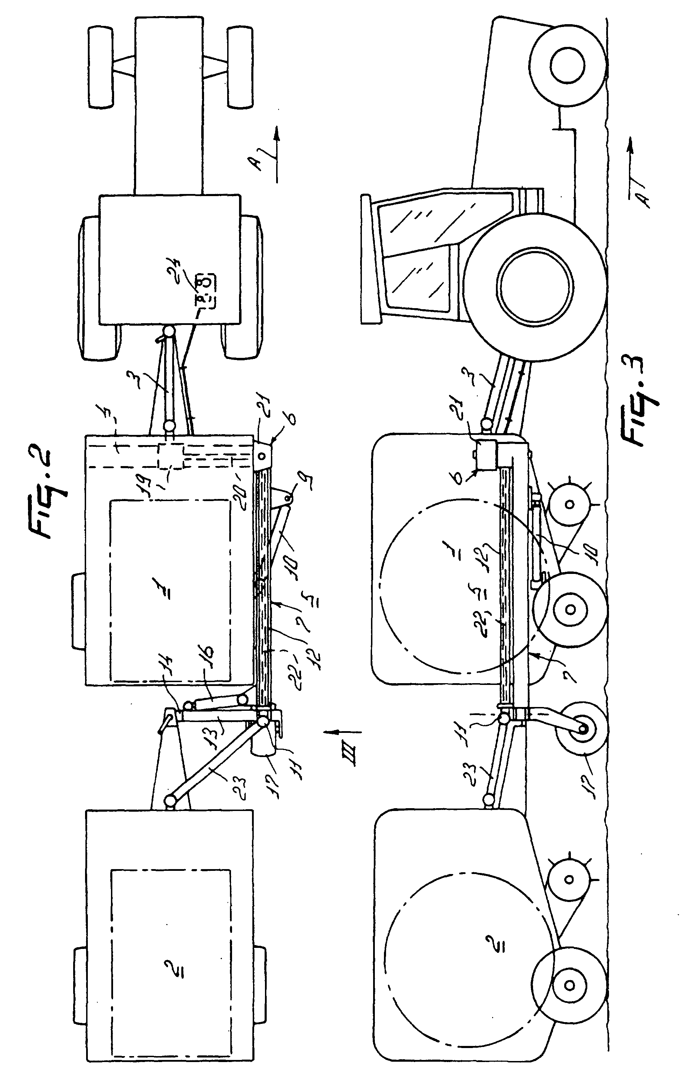

During operation, the machine combination is adjusted, with the aid of the operating elements 10 and 16, in such a way that the second baler 2, at a distance from the first baler 1, effects in one working run the same kind of treatment as the first baler 1. The secondary pivoting part 13 of the coupling beam 7 is preferably situated, during operation, in line with the primary pivoting part 12 thereof. However, both the first operating element 10 and the second operating element 16 can be used for an accurate adjustment of the mutual lateral distance of the balers 1 and 2, e.g. for the adjustment to different mutual distances between swaths to be picked up. As is shown in Figure 2, the machine combination can be brought easily, i.e. from the driver's seat on the tractor and without temporary uncoupling of the machine combination being necessary, in a transport position. To that end, the adjusting cylinders 10 and 16 are adapted from the tractor's cabin in such a way that the primary pivoting part 12 extends next to the first baler 1 substantially in the direction of travel A, and the secondary pivoting part 13 is adjusted square to the primary pivoting part 12. According to the invention, at least the primary pivoting part 12 of the coupling beam 7 is located in this positon above a wheel of the first baler 1. Due to this, the room occupied on the transport width of the baler 1 is minimal. According to the invention, the primary pivoting part 12 is of such a length that, in the transport position, it surpasses largely that of a baler. In view to this, the coupling point for the second adjusting cylinder 16 is disposed in the vicinity of the second hinge 11 with the primary pivoting part 12; consequently, the coupling point is situated behind the first baler 1 and does not form an impediment to the described transport position of the primary pivoting part 12. The secondary pivoting part 13 is adjusted, in the transport position, square to the direction of travel A, so that the total transport length of the machine combination is as small as possible. Also according to the invention, the length of the secondary pivoting part 13 has been chosen such that, in general, it corresponds with half the width of a baler. Consequently, the machines of the combination get in each other's track, so that the room required during transport thereof is minimal and transport by the public highway will be possible.

Machine combinations, according to the invention and as represented in the embodiment, furthermore have the advantages that each of the machines can be used separately, that the treating capacity of one tractor-cum-driver can simply be increased by increasing the number of coupled machines, and that, additionally, the machines can be adjusted immediately in a simple and quick manner from an operating position into a transport position. The described location of the supporting wheel 17 furthermore has the advantage that, during operation, it runs next to the swath to be picked up. With the aid of the control panel 24, the driver can define the moment of discharge of a bale and, by means of the adjusting means, the pressure attainable in the separate pressure chambers can be adjusted in such a way that the moments of discharging a bale of both machines turn out favourable in relation to each other.

The invention is not restricted to the aforementioned description, but also relates to all the details of the drawings. Furthermore, the invention relates to all kinds of alternatives in the construction, of course, being within the scope of the following claims.

## Claims

1. A machine combination including at least two machines for treating farmland as well as for treating the crop growing thereon, the combination comprising adjusting means (10, 16), with the aid of which the combination is adjustable in an operating position, in which the combined machines (1, 2) are active on strips of soil situated next to each other, and in a transport position, in which the machines (1, 2) are arranged behind each other in the direction of travel (A), the two machines (1, 2) being interconnected by means of a coupling device (5) including a coupling beam (7), **characterized in that,** the coupling beam (7) includes a hinge (6) near its end that is coupled with the first machine (1) and at some distance from the hinge (6) a pivot (9), **in that** between the pivot (9) and a more rearwardly located part of the first machine (1) there is situated a first operating element (10) which is pivotable.

2. A machine combination as claimed in claim 1, **characterized in that** at some distance from its other end the coupling beam (7) is provided with a second hinge (11) which divides the coupling beam (7) into a primary pivoting part (12) and a secondary pivoting part (13).

3. A machine combination as claimed in claim 2, **characterized in that** between a point of the primary pivoting part (12) situated near the second hinge (11) and the secondary pivoting part (13) of the coupling beam (7) there is disposed a second operating element (16).

4. A machine combination as claimed in claim 3, **characterized in that** the operating element (16) is situated, as seen in plan view, at some distance from and at the side of the second hinge (11) which faces the second machine (2).

5. A machine combination as claimed in claim 2, 3 or 4, **characterized in that** in the vicinity of the second hinge (11) the coupling device (5) is provided with a freely pivotable supporting wheel or castor wheel (17).

6. A machine combination as claimed in any one of the preceding claims, **characterized in that** an operating element (10, 16) is in the form of a hydraulic adjusting cylinder.

7. A machine combination as claimed in any one of the preceding claims, **characterized in that** the coupling device (5) comprises at least one hydraulically adjustable beam (12).

8. A machine combination as claimed in claim 2, **characterized in that** in transport position the primary pivoting part (12) extends next to the first machine (1) substantially in the direction of travel (A), and the secondary pivoting part (13) is adjusted square to the primary pivoting part (12).

9. A machine combination as claimed in claim 8, **characterized in that** at least the primary pivoting part (12) of the coupling beam (7) is located in this position above a wheel of the first machine (1).

10. A machine combination as claimed in one or more of the preceding claims, **characterized in that** the machines of the machine combination are formed by bale compressors (1, 2).

## Patentansprüche

1. Maschinenkombination mit mindestens zwei Maschinen zum Bearbeiten einer landwirtschaftlichen Fläche sowie zum Bearbeiten des darauf wachsenden Erntegutes, wobei die Kombination Stellvorrichtungen (10, 16) umfaßt, mit deren Hilfe die Kombination in eine Arbeitslage einstellbar ist, in der die kombinierten Maschinen (1, 2) nebeneinanderliegende Bodenstreifen bearbeiten, und in eine Transportlage, in der die Maschinen (1, 2) in Arbeitsrichtung (A) hintereinander angeordnet sind, wobei die beiden Maschinen (1, 2) durch eine Verbindungsvorrichtung (5) mit einem Verbindungsträger (7) miteinander verbunden sind,
**dadurch gekennzeichnet, daß** der Verbindungsträger (7) nahe seinem mit der ersten Maschine (1) verbundenen Ende ein Gelenk (6) und in einiger Entfernung von dem Gelenk (6) einen Drehzapfen (9) aufweist, und daß zwischen dem Drehzapfen (9) und einem weiter hinten liegenden Teil der ersten Maschine (1) ein erstes Betätigungsglied (10) angeordnet ist, das schwenkbar ist.

2. Maschinenkombination nach Anspruch 1,
**dadurch gekennzeichnet, daß** der Verbindungsträger (7) in einiger Entfernung von seinem anderen Ende mit einem zweiten Gelenk (11) versehen ist, das den Verbindungsträger (7) in einen ersten beweglichen Teil (12) und einen zweiten beweglichen Teil (13) unterteilt.

3. Maschinenkombination nach Anspruch 2,
**dadurch gekennzeichnet, daß** zwischen einer nahe dem zweiten Gelenk (11) gelegenen Stelle des ersten beweglichen Teiles (12) und dem zweiten beweglichen Teil (13) des Verbindungsträgers (7) ein zweites Betätigungsglied (16) angeordnet ist.

4. Maschinenkombination nach Anspruch 3,
**dadurch gekennzeichnet, daß** das Betätigungsglied (16) in Draufsicht betrachtet in einiger Entfernung seitlich des zweiten Gelenkes (11) angeordnet ist, das der zweiten Maschine (2) zugewandt ist.

5. Maschinenkombination nach Anspruch 2, 3 oder 4,
**dadurch gekennzeichnet, daß** die Verbindungsvorrichtung (5) in der Nähe des zweiten Gelenkes (11) mit einem frei drehbaren Stützrad oder Laufrad (17) versehen ist.

6. Maschinenkombination nach einem der vorhergehenden Ansprüche,
**dadurch gekennzeichnet, daß** ein Betätigungsglied (10, 16) als hydraulischer Stellzylinder ausgeführt ist.

7. Maschinenkombination nach einem der vorhergehenden Ansprüche,
**dadurch gekennzeichnet, daß** die Verbindungsvorrichtung (5) mindestens einen hydraulisch verstellbaren Träger (12) umfaßt.

8. Maschinenkombination nach Anspruch 2,
**dadurch gekennzeichnet, daß** sich der erste bewegliche Teil (12) in der Transportlage neben der ersten Maschine (1) im wesentlichen in Arbeitsrichtung (A) erstreckt und der zweite bewegliche Teil (13) rechtwinklig zu dem ersten beweglichen Teil (12) eingestellt ist.

9. Maschinenkombination nach Anspruch 8,
**dadurch gekennzeichnet, daß** zumindest der erste bewegliche Teil (12) des Verbindungsträgers (7) in dieser Lage über einem Rad der ersten Maschine (1) angeordnet ist.

10. Maschinenkombination nach einem oder mehreren der vorhergehenden Ansprüche,
**dadurch gekennzeichnet, daß** die Maschinen der Maschinenkombination durch Ballenpressen (1, 2) gebildet sind.

## Revendications

1. Combinaison de machines comprenant au moins deux machines destinée à traiter des terres agricoles ainsi qu'à traiter la culture y poussant, la combinaison comprenant des moyens d'ajustage (10, 16), à l'aide desquels la combinaison peut être ajustée dans une position de fonctionnement, dans laquelle les machines combinées (1, 2) sont actives sur des bandes de terre situées à proximité les unes des autres, et dans une position de transport, dans laquelle les machines (1, 2) sont disposées l'une derrière l'autre dans le sens de déplacement (A), les deux machines (1, 2) étant reliées entre elles au moyen d'un dispositif de couplage (5) comprenant une poutre de couplage (7), **caractérisée en ce que** la poutre de couplage (7) comprend une charnière (6) à proximité de son extrémité qui est couplée avec la première machine (1) et à une certaine distance de la charnière (6), un pivot (9), et **en ce que**, entre le pivot (9) et une partie de la première machine (1) située plus à l'arrière, se situe un premier élément de fonctionnement (10) qui peut pivoter.

2. Combinaison de machines selon la revendication 1, **caractérisée en ce que**, à une certaine distance de son autre extrémité, la poutre de couplage (7) est dotée d'une seconde charnière (11) qui divise la poutre de couplage (7) en une partie rotative primaire (12) et une partie rotative secondaire (13).

3. Combinaison de machines selon la revendication 2, **caractérisée en ce que**, entre un point de la partie rotative primaire (12) situé à proximité de la seconde charnière (11) et la partie rotative secondaire (13) de la poutre de couplage (7) est disposé un second élément de fonctionnement (16).

4. Combinaison de machines selon la revendication 3, **caractérisée en ce que** l'élément de fonctionnement (16) est situé, observé selon une vue en plan, à une certaine distance de et sur le côté de la seconde charnière (11) qui fait face à la seconde machine (2).

5. Combinaison de machines selon la revendication 2, 3 ou 4, **caractérisée en ce que**, à proximité de la seconde charnière (11), le dispositif de couplage (5) est doté d'une roue de support ou d'une roulette (17) pouvant pivoter librement.

6. Combinaison de machines selon l'une quelconque des revendications précédentes, **caractérisée en ce qu'**un élément de fonctionnement (10, 16) se présente sous la forme d'un cylindre d'ajustage hydraulique.

7. Combinaison de machines selon l'une quelconque des revendications précédentes, **caractérisée en ce que** le dispositif de couplage (5) comprend au moins une poutre (12) pouvant être ajustée de manière hydraulique.

8. Combinaison de machines selon la revendication 2, **caractérisée en ce que**, dans la position de transport, la partie rotative primaire (12) s'étend à proximité de la première machine (1) sensiblement dans le sens de déplacement (A), et la partie rotative secondaire (13) est ajustée à angle droit par rapport à la partie rotative primaire (12).

9. Combinaison de machines selon la revendication 8, **caractérisée en ce qu'**au moins la partie rotative primaire (12) de la poutre de couplage (7) se situe dans cette position au-dessus d'une roue de la première machine (1).

10. Combinaison de machines selon l'une ou plusieurs des revendications précédentes, **caractérisée en ce que** les machines de la combinaison de machines sont formées de compresseurs de bottes (1, 2).
